# EUROPEAN PATENT APPLICATION

(11) **EP 4 082 771 A1**
(43) Date of publication of application: **02.11.2022**
(21) Application number: 20905289.3
(22) Date of filing: 19.11.2020
(51) Int. Cl.: B32B 15/08, B32B 27/42, C08J 7/048, F16L 9/147

(54) **GAS BARRIER STRUCTURE, AIR-CONDITIONER COMPONENT, GAS METER DEVICE AND AUTOMOBILE COMPONENT**

(30) Priority: 24.12.2019 JP 2019232497
(71) Applicant: Sumitomo Bakelite Co.Ltd., Shinagawa-ku Tokyo 140-0002 (JP)
(72) Inventor: OCHIAI, Yuki, Tokyo 140-0002 (JP); MOCHIZUKI, Shunsuke, Tokyo 140-0002 (JP); OKASAKA, Shu, Tokyo 140-0002 (JP)
(74) Representative: Ter Meer Steinmeister & Partner
(86) International application number: PCT/JP2020/043210
(87) International publication number: WO 2021/131440

(57) **Abstract**

A structure (piping part (121)) has a cured product of a thermosetting resin composition (resin molded body (101)) and a plating layer (103) formed on a surface of the cured product, in which the plating layer (103) has a Cu layer (second plating layer (107)) and a thickness of the Cu layer (second plating layer (107)) is 2 µm or more and 50 µm or less.

## Description

### TECHNICAL FIELD

The present invention relates to a gas barrier structure formed by a cured product of a thermosetting resin composition, an air conditioner part, a gas metering apparatus, and an automotive part.

### BACKGROUND ART

In recent years, many products and parts, which were made of metal, are more and more coming to be made of plastic (that is, resin molded products) from the viewpoint of weight reduction and the like. Plating processes are applied to such products, parts, and the like from the viewpoints of weather resistance, design, and the like. Various techniques were proposed for plating processes of products made of resin. For example, Patent Document 1 (Japanese Unexamined Patent Publication No. 2018-58960) describes a technique which attempts to improve adhesion between a thermosetting resin molded body and a plating film. This document describes a resin composition for sealing which contains an epoxy resin, a phenol compound, and an aromatic monocarboxylic acid having a specific electron-withdrawing functional group and that it is possible for a sealing material produced using the above composition to have high adhesion to a plated lead frame at high temperatures.

In addition, Patent Document 2 (Japanese Unexamined Patent Publication No. H5-59587) is another example describing a method for plating plastics. The above document describes mixing calcium carbonate fine particles with a particle diameter of 10 µm or less into resins for which plating is difficult, such as polyethylene resin and polypropylene resin, to carry out molding and then processing the molded product by a normal ABS resin plating step, including a chemical etching process, and that, due to this, it is possible to use the normal ABS resin plating step and equipment as they are to adhere a plating layer to PA or PP resin or the like, for which plating is difficult.

### RELATED DOCUMENT

### PATENT DOCUMENT

[Patent Document 1] Japanese Unexamined Patent Publication No. 2018-58960
[Patent Document 2] Japanese Unexamined Patent Publication No. H5-59587

### SUMMARY OF THE INVENTION

### TECHNICAL PROBLEM

As described above, as products and parts come to be made of plastics instead of metals, it is clear that there is still room for improvement in gas barrier properties.

### SOLUTION TO PROBLEM

An aspect of the present invention is a gas barrier structure including a cured product of a thermosetting resin composition, and a plating layer formed on a surface of the cured product, in which the plating layer includes a Cu layer, and a thickness of the Cu layer is 2 µm or more and 50 µm or less.

Another aspect of the present invention is a gas barrier structure including a cured product of a thermosetting resin composition, and a plating layer provided on a surface of the cured product, in which a gas permeability of hydrogen gas is 2.0E⁻¹⁵ mol/m²·s·Pa or less in a gas permeability test using a differential pressure method (measurement environment: 23°C, humidity: 0%, permeation area: 15.2 × 10⁻⁴ m², test pressure: 4511 mmHg).

Another aspect of the present invention is a gas barrier structure including a cured product of a thermosetting resin composition, and a plating layer provided on a surface of the cured product, in which a gas permeability of a refrigerant gas (134a freon gas) is 2.5E⁻¹⁴ mol/m²·s·Pa or less in a gas permeability test using a differential pressure method (measurement environment: 80°C, humidity: 0%, permeation area: 38 cm², test pressure: 760 mmHg).

Another aspect of the present invention is an air conditioner part including the gas barrier structure described above.

Another aspect of the present invention is a gas metering apparatus including the gas barrier structure described above.

Another aspect of the present invention is an automotive part including the gas barrier structure described above.

### ADVANTAGEOUS EFFECTS OF INVENTION

According to the present invention, it is possible to improve the gas barrier property of a structure formed of a resin molded body.

### BRIEF DESCRIPTION OF THE DRAWINGS

Fig. 1 is a cross-sectional view schematically showing a schematic configuration of an air conditioner part in an embodiment.
Fig. 2 is an enlarged view showing a partial region of a thick-walled partial cross-section of a piping part of Fig. 1.

### DESCRIPTION OF EMBODIMENTS

A description will be given below of embodiments of the present invention using drawings . In all drawings, similar constituent elements are marked with common reference numerals and explanation thereof will not be repeated as appropriate. Unless otherwise noted, "A to B" in a numerical range represents A or more and B or less and includes the numerical values at both ends. In addition, in the present embodiment, it is possible for the composition to include each part alone or in a combination of two or more.

A description will be given below of (1) a structure subjected to a plating process and having a gas barrier property, (2) a phenol resin composition of the structure, and (3) a plating layer, in this order, and furthermore, a description will be given of (4) Examples of plating layers focusing on the gas barrier properties. In addition, for the Examples for showing the gas barrier properties, a description will be given of the gas barrier properties for hydrogen gas and freon gas (134a freon gas).

### (Structure subjected to Plating Process and having Gas Barrier Properties)

In the present embodiment, air conditioner parts (specifically, piping for refrigerant gas) are illustrated as products (including parts) in which a structure subjected to a plating process and having gas barrier properties is used, but the purpose is not limited thereto and, for example, application is possible to hydrogen gas supply members such as for fuel cells and hydrogen vehicles and the like.

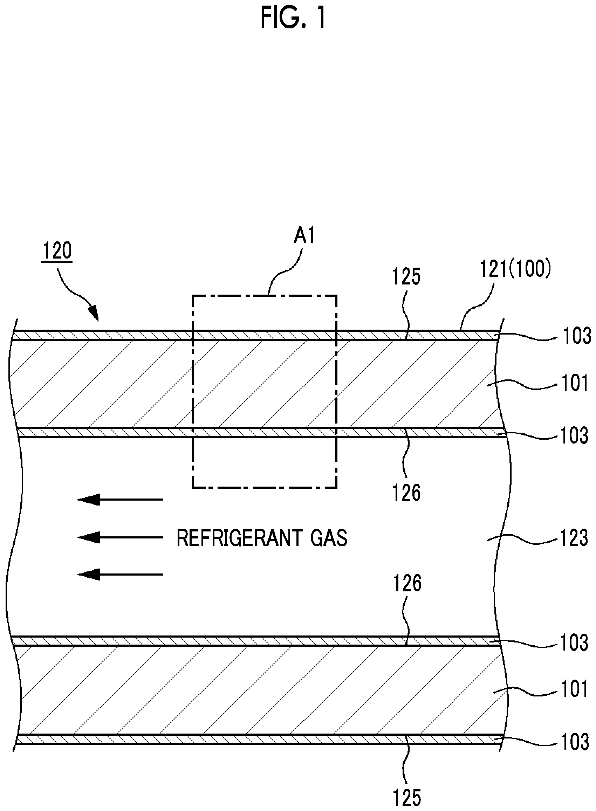

Fig. 1 is a cross-sectional view schematically showing a schematic configuration of an air conditioner part 120. Here, in the air conditioner part 120, in particular, a refrigerant gas piping part 121, which serves as a flow path for refrigerant gas and for which there is a demand for high gas barrier properties, is illustrated.

The piping part 121 is, for example, tubular and has a structure in which a plating process is carried out on a resin molded body. The piping part 121 is formed with a gas passage 123 in which a refrigerant gas (for example, 134a freon gas) flows in an inner part.

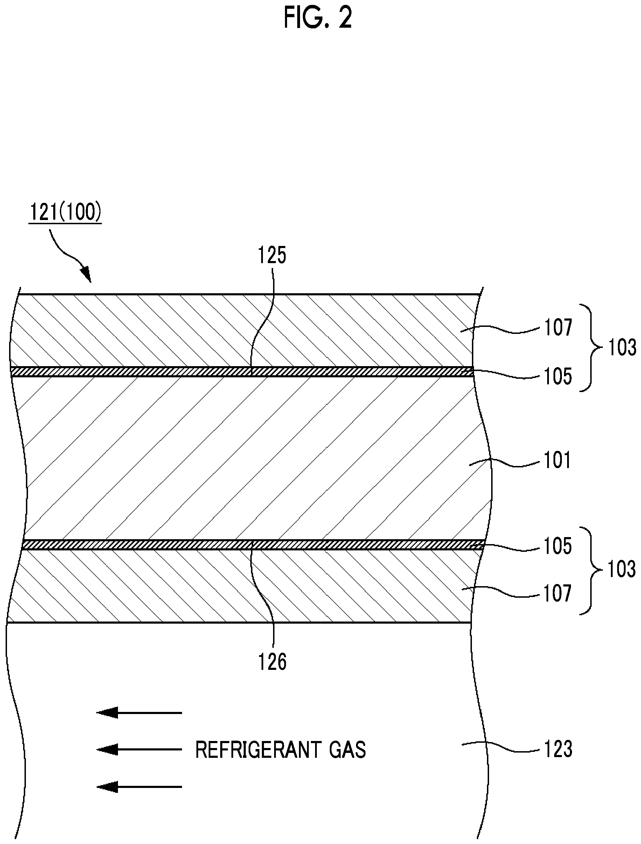

In the piping part 121, a plating process is carried out on an outer side wall 125 and an inner side wall 126. Fig. 2 shows an enlarged view of a partial region A1 of the thick-walled partial cross-section of the piping part 121 of Fig. 1. In this thick-walled portion, the piping part 121 has a resin molded body 101 and a plating layer 103 provided on the outer side wall 125 and the inner side wall 126 of the resin molded body 101. That is, a plating process is carried out on both sides of the resin molded body 101.

As shown in Fig. 2, the plating layer 103 has a first plating layer 105 and a second plating layer 107, from the resin molded body 101 side.

The resin molded body 101 is a cured product of a phenol resin composition. The thickness of the resin molded body 101 is, for example, 2 mm.

The first plating layer 105 is, for example, an electroless Ni film (Ni layer) . The thickness of the first plating layer 105 is, for example, 0.1 µm or more and also 3 µm or less.

The second plating layer 107 is, for example, an electrolytic Cu film (Cu layer) . The thickness of the second plating layer 107 is, for example, 2 µm or more, preferably 10 µm or more, more preferably 20 µm or more, and also 60 µm or less and preferably 50 µm or less.

The plating layer 103 is preferably formed on the entire surface of the outer side wall 125 and the inner side wall 126. In particular, the inner side wall 126 is a region directly exposed to refrigerant gas and it is thus desirable to carry out the formation on the entire surface thereof and to block external permeation of the gas.

First, a description will be given below of the phenol resin composition, followed by description of the plating layer 103.

### (Phenol Resin Composition)

A phenol resin composition (also referred to below simply as "resin composition" as appropriate) is a resin composition which is used for a resin molded body for which a plating process is applied on a surface and which includes the following components (A) and (B).
(A) Phenol resin
(B) Calcium carbonate

In the present embodiment, the resin composition is specifically a thermosetting resin composition.

A description will be given below of the constituent components of the resin composition with specific examples.

### (Component (A))

Component (A) is a phenol resin.

The component (A) may be, for example, any component used as a molding material and specifically includes one or two or more selected from the group consisting of resol-type phenol resins and novolac-type phenol resins. From the viewpoint of improving adhesion to the plating film formed on the surface of the resin molded body, the component (A) more preferably includes a resol-type phenol resin and a novolac-type phenol resin and is more preferably a resol-type phenol resin and a novolac-type phenol resin.

Among the above, including the resol-type phenol resin in the component (A) makes it possible to improve the adhesion to the plating film formed on the surface of the resin molded body, to moderately increase the cross-link density of the resin molded body, to improve the toughness of the resin molded body, and to improve the mechanical strength. In addition, since it is possible to moderately improve the cross-link density in this manner, it is possible to efficiently suppress dimensional changes in the resin molded body due to water and moisture absorption.

It is possible to obtain resol-type phenol resins, for example, by reacting phenols and aldehydes in the presence of a basic catalyst, usually at a molar ratio of aldehydes with respect to phenols (aldehydes/phenols) of 1.3 to 1.7.

Here, examples of the phenols used when manufacturing resol-type phenol resins include one or two or more phenol compounds selected from the group consisting of phenol, o-cresol, m-cresol, p-cresol, xylenol, alkylphenols, catechol, and resorcinol.

In addition, examples of aldehydes used when manufacturing resol-type phenol resins include aldehyde compounds such as formaldehyde, paraformaldehyde, and benzaldehyde, substances which are the sources generating these aldehyde compounds, or solutions of these aldehyde compounds.

From the viewpoint of improving the heat resistance of the resin molded body and from the viewpoint of suppressing dimensional changes in the resin molded body due to water and moisture absorption, when the component (A) includes a resol-type phenol resin, the content thereof is more than 0% by mass with respect to the entire component (A) included in the resin composition, preferably 50% by mass or more, more preferably 60% by mass or more, even more preferably 70% by mass or more, and yet more preferably 75% by mass or more.

In addition, from the viewpoint of suppressing dimensional changes in the resin molded body due to heating, the content of the resol-type phenol resin is 100% by mass or less with respect to the entire component (A) included in the resin composition, preferably 95% by mass or less, more preferably 90% by mass or less, even more preferably 85% by mass or less, and yet more preferably 80% by mass or less.

In addition, the component (A) including a novolac-type phenol resin makes it possible to improve the adhesion to the plating film formed on the surface of the resin molded body and to improve the mechanical strength of the resin molded body.

Examples of the novolac-type phenol resin include phenol novolac resin, cresol novolac resin, and bisphenol novolac resin.

From the viewpoint of increasing the adhesion to the plating film formed on the surface of the resin molded body as well as increasing the mechanical strength of the resin molded body, the novolac-type phenol resin preferably includes one or two or more resins selected from the group consisting of the resin represented by General Formula (1) and the resin represented by General Formula (2).

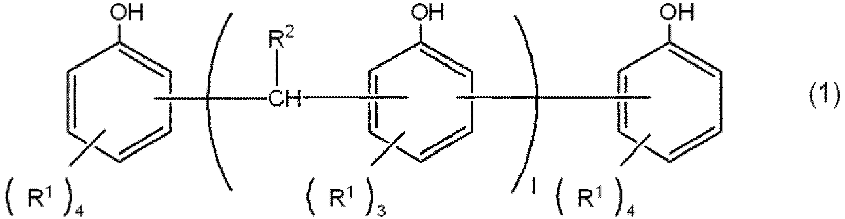

(In General Formula (1), R¹ each independently represents a hydrogen atom, a hydroxyl group, an alkyl group having 1 to 10 carbon atoms, a cycloalkyl group having 1 to 10 carbon atoms, or an aryl group or a substituted aryl group having 6 to 10 carbon atoms, R² each independently represents a hydrogen atom, an alkyl group having 1 to 10 carbon atoms, a cycloalkyl group having 1 to 10 carbon atoms, or an aryl group or substituted aryl group having 6 to 10 carbon atoms, and 1 is a number of 1 or more and 10 or less.)

For example, it is possible to appropriately select the resins shown in General Formula (1) from resins obtained by reacting phenols with aldehydes, for example, without a catalyst or in the presence of an acidic catalyst, in accordance with the application. More specifically, it is possible to use a random novolac-type or high-ortho novolac-type phenol resin as the resin shown in General Formula (1).

Usually, it is possible to obtain this novolac-type phenol resin by carrying out the reaction while controlling the molar ratio (aldehydes/phenols) of the aldehydes with respect to the phenols to be 0.7 to 0.9.

Specific examples of phenols used when preparing the resin shown in General Formula (1) include phenol, o-cresol, m-cresol, p-cresol, xylenol, alkylphenols, catechol, and resorcinol.

In addition, examples of aldehydes used when preparing the resin shown in General Formula (1) include aldehyde compounds such as formaldehyde, paraformaldehyde, and benzaldehyde, substances which are the sources generating these aldehyde compounds, or solutions of these aldehyde compounds.

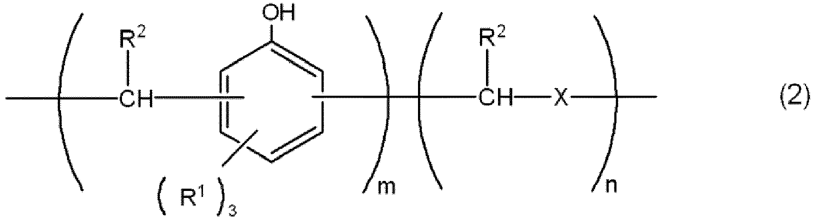

(In General Formula (2), R¹ each independently represents a hydrogen atom, a hydroxyl group, an alkyl group having 1 to 10 carbon atoms, a cycloalkyl group having 1 to 10 carbon atoms, or an aryl group or substituted aryl group having 6 to 10 carbon atoms, R² each independently represents a hydrogen atom, an alkyl group having 1 to 10 carbon atoms, a cycloalkyl group having 1 to 10 carbon atoms, or an aryl group or a substituted aryl group having 6 to 10 carbon atoms, group X is a divalent group selected from the groups represented by General Formulas (3) to (5), m is a number of 1 or more and 10 or less, and n is a number of 1 or more and 10 or less.)

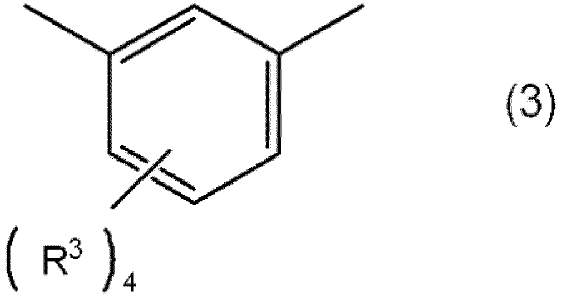

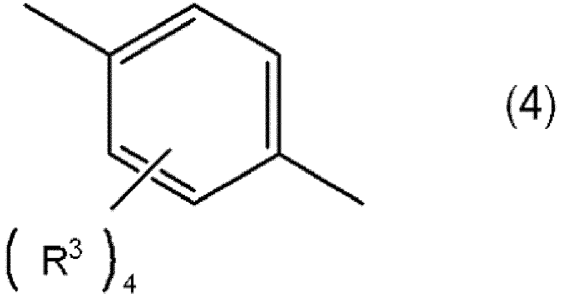

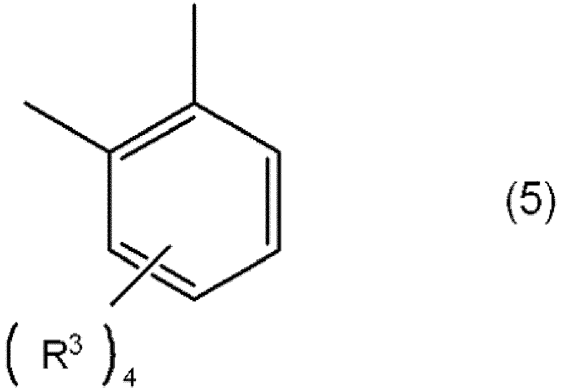

(In General Formulas (3) to (5), R³ are each independently a hydrogen atom, an alkyl group having 1 to 10 carbon atoms, or a cycloalkyl group having 1 to 10 carbon atoms.)

As specific examples of the method for preparing the resin shown in General Formula (2), for the benzene-modified phenol resin corresponding to a case where R³ in General Formula (3) to (5) are all hydrogen atoms, preparation is possible by reacting para-xylene dimethyl ether with phenols in the presence of an acidic catalyst, for example. In addition, in a case of a substituted benzene-modified phenol resin in which R³ in General Formulas (3) to (5) corresponds to an alkyl group with 1 to 10 carbon atoms or a cycloalkyl group with 1 to 10 carbon atoms, preparation is possible by first reacting substituted benzene with aldehydes in the presence of an acidic catalyst and then reacting the obtained polymer with phenols or phenols and aldehydes with an acidic catalyst.

In this manner, it is possible to intercalate a structural unit derived from benzene or substituted benzene in the repeating units of the novolac-type phenol resin.

Although the terminal structural unit is not shown in General Formula (2), such a structural unit may be both a structural unit derived from phenols and a structural unit derived from benzene or substituted benzene.

In addition, the modification ratio of the resin shown in General Formula (2) is defined as the ratio of n with respect to the sum of m and n in General Formula (2), that is, the value of (n/(m+n)). It is possible to appropriately adjust this modification ratio according to the usage application or the like; however, from the viewpoint of controlling the cross-link density to be moderate when producing a resin molded body from the phenol resin composition, the modification ratio is, for example, 0.15 or more, and preferably 0.20 or more, and, for example, 0.60 or less, and preferably 0.50 or less.

Specific examples of phenols used when preparing the resin shown in General Formula (2) include phenol, o-cresol, m-cresol, p-cresol, xylenol, alkylphenols, catechol, resorcinol, and the like. These phenols may be used alone or in a mixture of two or more.

As aldehydes used when preparing the resins shown in General Formula (2), for example, it is possible to use aldehyde compounds such as formaldehyde, paraformaldehyde, and benzaldehyde, substances which are sources generating these aldehyde compounds, solutions of these aldehyde compounds, and the like. These aldehydes may be used alone or in a mixture of two or more.

In addition, examples of substituted benzene used when preparing the resin shown in General Formula (2) include toluene, xylene, mesitylene, and cyclohexylbenzene.

When preparing the resin shown in General Formula (2), due to a high ease of availability, benzene, or toluene or xylene among the substituted benzenes described above, is employed and, as the phenols, a phenol in which all R¹ groups are hydrogen atoms is employed to prepare a benzene-modified novolac-type phenol resin, a toluene-modified novolac-type phenol resin, or a xylene-modified novolac-type phenol resin and it is preferable to use the above as the resin shown in General Formula (2).

From the viewpoint of making the processability of the resin molded body preferable, when the component (A) includes a novolac-type phenol resin, the content thereof is more than 0% by mass with respect to the entire component (A) included in the resin composition, preferably 5% by mass or more, more preferably 10% by mass or more, even more preferably 15% by mass or more, and yet more preferably 20% by mass or more.

In addition, from the viewpoint of improving the mechanical strength of the resin molded body, the content of the novolac-type phenol resin is 100% by mass or less with respect to the entire component (A) included in the resin composition, preferably 50% by mass or less, more preferably 40% by mass or less, even more preferably 35% by mass or less, yet more preferably 30% by mass or less, and still more preferably 20% by mass or less.

From the viewpoint of improving the curing characteristics of the resin composition, the content of the component (A) in the resin composition is preferably 10% by mass or more with respect to the entire resin composition, more preferably 20% by mass or more, and even more preferably 30% by mass or more.

In addition, from the viewpoint of improving the adhesion to the plating film formed on the surface of the resin molded body, the content of the component (A) in the resin composition may be, for example, 99% by mass or less with respect to the entire resin composition, preferably 90% by mass or less, more preferably 80% by mass or less, even more preferably 70% by mass or less, yet more preferably 60% by mass or less, and still more preferably 50% by mass or less.

### (Component (B))

Component (B) is calcium carbonate.

The shape of the calcium carbonate is not limited and, for example, it is possible to use a granular shape such as a sphere.

From the viewpoint of improving the adhesion between the resin molded body and the plating film, the average particle diameter d₅₀ of the component (B) is preferably 0.1 µm or more, more preferably 0.5 µm or more, and even more preferably 1.0 µm or more, and also preferably 30 µm or less, more preferably 20 µm or less, and even more preferably 10 µm or less.

In addition, from the same viewpoint, the component (B) may include a component with a large particle diameter and a component with a small particle diameter.

For example, in the component (B), the ratio of particles having a particle diameter of 0.1 µm or more and 1 µm or less may be preferably 5% or more with respect to the entire component (B) and more preferably 25% or more and preferably 45% or less and more preferably 30% or less.

In addition, in the component (B), the ratio of particles having a particle diameter of 1 µm or more and 10 µm or less is preferably 10% or more with respect to the entire component (B), more preferably 45% or more, and preferably 80% or less, and may also be 60% or less, for example.

Here, for the average particle diameter d₅₀ and other particle size characteristics of the calcium carbonate, it is possible to measure the particle size distribution of the particles on a volume basis using a commercially available laser diffraction particle size analyzer (for example, SALD-7000 manufactured by Shimadzu Corporation). Here, it is possible to use the obtained median diameter (d₅₀) as the average particle diameter.

From the viewpoint of improving the adhesion between the resin molded body and the plating film, the content of the component (B) in the resin composition is preferably 1% by mass or more with respect to the entire resin composition, more preferably 2% by mass or more, even more preferably 5% by mass or more, and yet more preferably 7% by mass or more.

In addition, from the viewpoint of improving the strength of the resin molded body, the content of the component (B) in the resin composition is preferably 50% by mass or less with respect to the entire resin composition, more preferably 30% by mass or less, even more preferably 20% by mass or less, and yet more preferably 15% by mass or less.

In the present embodiment, since the resin composition includes the components (A) and (B), it is possible to effectively improve the adhesion between the resin molded body and the plating film when a plating process is applied to the surface of the resin molded body formed of the cured product of the resin composition. For this reason, the resin composition of the present embodiment is suitably used to obtain a resin molded body for which a plating process is applied on a surface.

For the cured product obtained by molding the resin composition at 175°C for 3 minutes and then carrying out curing at 180°C for 4 hours, the linear expansion coefficient in the range of 40°C to 150°C, as measured by thermomechanical analysis (TMA) at a temperature rise rate of 5°C/min, is preferably 5 ppm/°C or more, more preferably 8 ppm/°C or more, and even more preferably 10 ppm/°C or more, from the viewpoint of improving the reliability of temperature cycling of molded bodies obtained by carrying out a plating process on the surface of a resin molded body, in addition, for example, the linear expansion coefficient may be 70 ppm/°C or less, preferably 30 ppm/°C or less, more preferably 25 ppm/°C or less, even more preferably 20 ppm/°C or less, and yet more preferably 18 ppm/°C or less.

In the present embodiment, the resin composition may include components other than the components (A) and (B).

### (Component (C))

Component (C) is an elastomer. By the resin composition further including the component (C), it is possible to obtain a resin molded body having excellent adhesion with a plating film in a more stable manner.

The component (C) is preferably soluble in acid.

Specific examples of the component (C) include one or two or more selected from the group consisting of butadiene rubber; butadiene acrylonitrile copolymer; and modified polyvinyl alcohols such as alkyl acetalized polyvinyl alcohol.

From the viewpoint of improving the adhesion between the resin molded body and the plating film, the component (C) preferably includes one or two or more selected from the group consisting of butadiene rubber; butadiene acrylonitrile copolymer; and modified polyvinyl alcohol.

From the viewpoint of improving the adhesion between the resin molded body and the plating film, the content of the component (C) in the resin composition is preferably 0.5% by mass or more with respect to the entire resin composition, more preferably 1% by mass or more, even more preferably 1.5% by mass or more, and yet more preferably 2.5% by mass or more.

In addition, from the viewpoint of improving the strength of the resin molded body, the content of the component (C) in the resin composition is preferably 10% by mass or less by mass with respect to the entire resin composition, more preferably 8% by mass or less, even more preferably 6% by mass or less, and yet more preferably 4% by mass or less.

### (Filler)

The resin composition may include a filler other than the component (B). Examples of the shape of the filler include a fibrous shape or a granular shape, such as a spherical shape.

Specific examples of fibrous shape fillers include glass fiber, carbon fiber, fibrous wollastonite, and rock wool. It is possible to set the number average fiber diameter of the fibrous shape filler to be, for example, 10 to 15 µm, and the number average fiber length to be, for example, 20 to 5000 µm. The use of such a fibrous shape filler makes it possible to improve the workability during the manufacturing of the resin composition and also to further improve the mechanical strength of the resin molded body.

In addition, specific examples of granular fillers include spherical glass such as glass beads and glass powder, silica such as spherical silica and crushed silica, aluminum hydroxide, clay, and mica.

From the viewpoint of improving adhesion to the plating film formed on the surface of the resin molded body as well as improving the mechanical strength of the resin molded body, the resin composition preferably includes an inorganic filler and more preferably includes glass fibers.

From the viewpoint of improving the mechanical strength of the resin molded body, the content of the filler other than the component (B) in the resin composition is preferably 0.5% by mass or more with respect to the entire resin composition, more preferably 1% by mass or more, even more preferably 1.5% by mass or more, and yet more preferably 2.5% by mass or more.

In addition, from the viewpoint of improving the curing characteristics of the resin composition, the content of the filler other than the component (B) in the resin composition is preferably 70% by mass or less with respect to the entire resin composition, more preferably 60% by mass or less, even more preferably 55% by mass or less, and yet more preferably 50% by mass or less.

In addition, the resin composition may include a resin component other than the component (A). Such a resin component is one or two or more types selected from the group consisting of, for example, a resin having a triazine ring such as urea resin and melamine resin; a bismaleimide (BMI) resin; a polyurethane resin; a silicone resin; a resin having a benzoxazine ring; a cyanate ester resin; a polyvinyl butyral resin; and a polyvinyl acetate resin.

In addition, the resin composition may also include, for example, various additives used in thermosetting resin molding materials. Specific examples of additives include mold release agents such as stearic acid, calcium stearate, magnesium stearate, carnauba wax, and polyethylene; curing aids such as magnesium oxide and calcium hydroxide (slaked lime) ; coloring agents such as carbon black; adhesion improvers or coupling agents to improve the adhesion between the filler and the thermosetting resin; and solvents.

The content of each of these components in the resin composition is, for example, approximately 0.1 to 5% by mass with respect to the entire resin composition.

### (Resin Composition Blending Examples)

A description will be given of resin composition (phenol resin molded product) blending examples relating to the adhesion of a plating layer with reference to Table 1.

### (Preparation of Resin Compositions)

For each of the blending examples, a resin composition for sealing was prepared as follows. That is, a granular molding material (phenol resin composition) was obtained by kneading a mixture of each component blended according to the blending amounts shown in Table 1 with heating rolls having different rotation speeds and grinding the cooled result into a sheet form. Here, for the kneading conditions of the heating rolls, the rotation speed was 20/14 rpm on the high-speed side/low-speed side, the temperature was 90/20°C on the high-speed side/low-speed side, and the kneading time was 5 to 10 minutes.

The details of each component in Table 1 are as follows. In addition, the blending ratio of each component shown in Table 1 indicates the blending ratio (% by mass) with respect to the entire resin composition.
(A) Phenol resin 1: Resol-type phenol resin, PR-53529 (manufactured by Sumitomo Bakelite Co., Ltd.)
(A) Phenol resin 2: Novolac-type phenol resin, PR-51305 (manufactured by Sumitomo Bakelite Co., Ltd.)
Curing aid 1: Slaked lime
Filler 1: Glass fiber, CS3E479 (manufactured by Nitto Boseki Co., Ltd.), number average fiber diameter 11 µm, number average fiber length 3 mm
Filler 2: Crushed silica, RD-8 (manufactured by Tatsumori Ltd.), d₅₀ = 15 µm
(B) Calcium carbonate 1: NS #100 (manufactured by Nitto Funka Kogyo K.K.), average particle diameter d₅₀ = 5.3 µm, ratio of particles with a particle diameter of 0.1 µm or more and 1 µm or less: 9.5%, ratio of particles with a particle diameter of 1 µm or more and 10 µm or less: 80%
(B) Calcium carbonate 2: Escalon #800 (manufactured by Sankyo Seifun Co., Ltd.), average particle diameter d₅₀ = 3.0 µm, ratio of particles with a particle diameter of 0.1 µm or more and 1 µm or less: 27%, ratio of particles with a particle diameter of 1 µm or more and 10 µm or less: 73%
(C) Elastomer 1: Butadiene acrylonitrile-based copolymer, TR2250 (manufactured by JSR Corporation)
(C) Elastomer 2: Alkyl acetalized polyvinyl alcohol, S-LEC BH-3 (manufactured by Sekisui Chemical Co., Ltd.)
(C) Elastomer 3: Alkyl acetalized polyvinyl alcohol, S-LEC BL-5 (manufactured by Sekisui Chemical Co., Ltd.)
Mold release agent 1: Calcium stearate (manufactured by Tokyo Chemical Industry Co., Ltd.)
Coloring agent 1: Carbon black, #5 (manufactured by Mitsubishi Chemical Corporation)

The following measurements were performed on the resin compositions obtained in each example. The results are shown collectively in Table 1.

### (Method for Measuring Physical Properties of Resin Molded Body)

### (Method for Measuring Linear Expansion Coefficient α)

For the resin compositions obtained in each example, bending test pieces were molded at 175°C for 3 minutes and then subjected to a curing process in an oven at 180°C for 4 hours to obtain cured product test pieces. TMA measurements were carried out in the flow direction of the obtained test pieces. The TMA measurements were carried out with a temperature rising at 5°C/min and the average linear expansion coefficient for 40°C to 150°C was set as α.

### (Evaluation Method)

### (Method for Measuring Peel Strength)

For the resin compositions obtained in each example, a molded product of 125 mm square x 1.5 mm thickness was molded under conditions of 175°C for 90 seconds to obtain a resin molded body. Thereafter, the resin molded body was subjected to a curing process in an oven at 180°C for 8 hours and chromic acid etching was carried out on the plating film-forming surface of the obtained resin molded body to roughen the plating film-forming surface. The etching solution was an aqueous solution including chromic anhydride and sulfuric acid in the following concentrations, respectively.

### (Etching Solution)

### Component Concentration

Chromic anhydride 400 g/L
Sulfuric acid 400 g/L

Thereafter, a 0.1 to 3 µm Ni film was formed on the etched surface of the resin molded body by electroless Ni plating and then a 2 to 50 µm Cu film was formed by electrolytic Cu plating. The plating width was set at 10 mm. The composition of the plating solution (aqueous solution) used in each plating step is shown below.

### (Plating Solution for Electroless Ni Plating)

### Component Concentration

Nickel sulfate 20 g/L
Sodium hypophosphite 15 g/L
Ammonium citrate 30 g/L

### (Plating Solution for Electrolytic Cu Plating)

### Component Concentration

Copper sulfate 200 g/L
Sulfuric acid 50 g/L

The strength when the plating is peeled off orthogonally from the molded body obtained as described above, that is, the maximum peel strength when a 90° peel test is performed, is set as the peel strength. The method for measuring the strength is as follows. Measurement method: One end of the copper foil is peeled off to an appropriate length and then attached to a support bracket and the tip of the peeled copper foil is gripped with a gripping tool and approximately 50 mm is continuously peeled off at a speed of approximately 50 mm per minute in the direction in which the tensile direction is orthogonal to the surface of the copper foil. The lowest value of the load during this period was set as the peel-off strength [N/cm].

### (Method for Measuring Flexural Strength and Flexural Modulus)

For the resin compositions obtained in each example, bending test pieces were molded under curing conditions of 175°C for 3 minutes in accordance with JIS K 6911 and then cured at 180°C for 4 hours to obtain test pieces. The strength when the test pieces were broken in accordance with JIS K 6911 was used as the flexural strength. In addition, the flexural modulus was determined from the slope of the stress-strain curve in the elastic range.

**[Table 1]**

| | | Blending Example 1 | Blending Example 2 | Blending Example 3 | Blending Example 4 | Blending Example 5 | Blending Example 6 | Blending Example 7 |
|---|---|---|---|---|---|---|---|---|
| Component (% by mass) | (A) Phenol resin 1 | 30 | 30 | 2C | 61 | 3C | 3C | 3C |
| | (A) Phenol resin 2 | 8 | 8 | 16 | 15 | 8 | 6.0 | 8 |
| | Curing aid 1 | 1.2 | 1.2 | 2 | 2.5 | 1.2 | 1.0 | 1.2 |
| | Filler 1 | 45 | 45 | | | 45 | 55 | 55 |
| | Filler 2 | | | 2C | 3 | 10 | 2.C | 3 |
| | (B) Calcium carbonate 1 | 10.0 | | 4C | 10 | | | |
| | (B) Calcium carbonate 2 | | 10 | | | | | |
| | (C) Elastomer 1 | | | | 2 | 1.5 | 2.C | |
| | (C) Elastomer 2 | | | | | 1.5 | | |
| | (C) Elastomer 3 | 3.0 | 3 | | | | | |
| | Mold release agent | 1.8 | 1.8 | 0.6 | 4.5 | 1.8 | 3 | 1.8 |
| | Coloring agent 1 | 1.0 | 1.0 | 1.4 | 2 | 1.0 | 1.0 | 1.0 |
| | Total | 100 | 100 | 100 | 100 | 100 | 100 | 100 |
| Peel strength | (N/cm) | 1.4 | 2.2 | 2.5 | 1 | 0.5 | 0.5 | 0.5 |
| Flexural strength | E (180°C4h) (MPa) | 191 | 184 | 92 | 90 | 25C | 248 | 202 |
| Flexural modulus | E (180°C4h) (GPa) | 14.0 | 13.6 | 12.0 | 10.5 | 15.5 | 16.7 | 15.2 |
| α | E (180°C4h) (ppm/°C) | 12 | 14 | 26.8 | 60 | 12 | 10.6 | 11 |

From Table 1, in the molded bodies obtained using the resin compositions in Blending Examples 1 to 4, the peel strength of the plating film from the resin molded body was higher than that of Blending Examples 5 to 7. Accordingly, by using the resin compositions in Blending Examples 1 to 4, it is possible to improve the adhesion between the plating film and the resin molded body when the plating film is formed on the surface of the resin molded body.

In addition, the resin compositions obtained in Blending Examples 1 to 4 had preferable characteristics in terms of the flexural strength, flexural modulus, and linear expansion coefficient of the cured products.

### (Resin Molded Body)

The resin molded body (molded product) is formed of the cured product of the resin composition described above.

In addition, it is possible to obtain the resin molded body by molding the resin composition described above. The molding method is preferably transfer molding or injection molding.

At this time, the conditions also depend on the thickness of the resin molded body, for example, in a case of molding a thick-walled molded product of approximately 5 mm by injection molding, it is possible to adopt conditions of a mold temperature of 170°C to 190°C, a molding pressure of 100 to 150 MPa, and a curing time of 30 to 90 seconds.

In addition, it is possible to perform after-baking on the obtained resin molded body as necessary and to select the conditions for after-baking as appropriate for the application. For example, it is possible to set the maximum attainable temperature to from 150°C to 270°C and the holding time to from 1 hour to 15 hours. More preferably, it is possible to set the maximum attainable temperature to from 170°C to 240°C and the holding time to from 1 hour to 10 hours. The higher the temperature at which the after-baking is performed, the smaller the change in heating dimensions in the use environment tends to be.

In addition, from the viewpoint of further improving the adhesion between the resin molded body and the plating film, the resin molded body preferably has a sea-island structure and the resin molded body more preferably has a sea-island structure in which the component (C) is present in the island phase.

Here, it is possible to confirm the sea-island structure by electron microscopic observation.

### (Molded Body)

The molded body has a cured product of the resin composition described above and a plating layer provided in contact with the surface of the cured product. This molded body is used for the thick-walled portion (the resin molded body 101) of the piping part 121 of the air conditioner part 120 shown in Fig. 1.

As shown in Fig. 2, a molded body 100 (the piping part 121) has the resin molded body 101 formed of a cured product of a resin composition and the plating layer 103 provided in contact with the surface of the resin molded body 101. The plating layer 103 may be formed of one layer or may have a plurality of layers, for example, Fig. 2 shows a configuration in which the plating layer 103 includes a first plating layer 105 and a second plating layer 107 from the resin molded body 101 side. In addition, the plating layer 103 is preferably provided over the entire surface of the resin molded body 101.

The methods for plating the first plating layer 105 and the second plating layer 107 may be the same or different.

From the viewpoint of improving the adhesion between the resin molded body and the plating layer 103, the first plating layer 105 is specifically an electroless plating layer. In addition, the second plating layer 107 may be an electroless plating layer or an electrolytic plating layer.

In addition, the first plating layer 105 and the second plating layer 107 are specifically metal layers, for example, these layers are independently layers including one or two or more selected from the group consisting of Cu, Ni, Al, Fe, Au, and alloys thereof.

From the viewpoint of improving the adhesion between the resin molded body and the plating layer 103, preferably, one of the first plating layer 105 and the second plating layer 107 is a Ni film and the other is a Cu film.

From the viewpoint of improving the adhesion between the resin molded body 101 and the plating layer 103, the resin molded body 101 preferably has a roughened layer on the bonding surface with the plating layer 103 and the plating layer 103 is provided in an inner part of a recess provided in the roughened layer.

### (Plating Layer Suitable for Case Demanding High Gas Barrier Property)

Here, as shown in Fig. 1, in a case where there is a demand for a high gas barrier property, such as a case where the molded body 100 is applied to the piping part 121 of the air conditioner part 120, the plating layer 103 is preferably formed as follows. That is, in Fig. 2, it is preferable that the first plating layer 105 on the resin molded body 101 side is a Ni film (Ni layer) and the second plating layer 107 on the outside is a Cu film (Cu layer).

At this time, the thicknesses of the plating layer 103, the first plating layer 105 (Ni layer), and the second plating layer 107 (Cu layer) preferably satisfy the following values. That is, the thickness of the plating layer 103 is 2 µm or more, preferably 10 µm or more, and more preferably 20 µm or more and also 60 µm or less and preferably 50 µm or less.

In addition, more preferably, the thickness of the second plating layer 107 (Cu layer) in the plating layers 103 is 2 µm or more, preferably 10 µm or more, and more preferably 20 µm or more and also 60 µm or less and preferably 50 µm or less.

In addition, more preferably, the thickness of the first plating layer 105 (Ni layer) in the plating layers 103 is 0.1 µm or more and also 3 µm or less.

As another configuration of the plating layers 103, the first plating layer 105 on the resin molded body 101 side may be a Cu film (Cu layer) and the second plating layer 107 on the outside may be a Ni film (Ni layer) (not shown). At this time, the thickness of the first plating layer 105, which is a Cu film (Cu layer), is 2 µm or more, preferably 10 µm or more, and more preferably 20 µm or more, and is also 60 µm or less and preferably 50 µm or less. In addition, the thickness of the second plating layer 107 (Ni layer), which is a Ni film (Ni layer), is 0.1 µm or more and 3 µm or less.

In addition, in the configuration of the plating layer 103 shown in Fig. 2, a third plating layer (not shown) may be provided further outside the second plating layer 107 (Cu layer). As the third plating layer, for example, there is a Ni film (Ni layer) having a thickness of 0.1 µm or more.

In any case, it is possible to realize a high gas barrier property by including a Cu layer in the plating layer 103 and the thickness of the Cu layer being 2 µm or more, preferably 10 µm or more, and more preferably 20 µm or more and 60 µm or less and preferably 50 µm or less.

### (Method for Manufacturing Molded Body)

Next, a description will be given of the method for manufacturing the molded body 100. The method for manufacturing a molded body includes, for example, a step of preparing a cured product of the resin composition described above, that is, the resin molded body 101, a step of etching and roughening the surface of the resin molded body 101, and a step of forming the plating layer 103 on the roughened surface.

The step of etching and roughening the surface of the resin molded body 101 is specifically a step in which the surface on which the plating layer 103 is to be formed is etched prior to the plating process to dissolve and remove calcium carbonate present in the vicinity of the surface of the resin molded body 101 and form a roughened layer provided with unevenness on the surface. In addition, when the resin molded body 101 includes an elastomer which dissolves in the etching solution, the elastomer present in the vicinity of the surface of the resin molded body 101 is preferably removed together with the calcium carbonate.

Examples of the etching method include acid processing. Specific examples of acids used in the acid processing include chromic acid, sulfuric acid, and the like. For example, in a case where the acid used is chromic acid only, it is possible to appropriately set the etching conditions according to the type of components such as the phenol resin included in the resin molded body 101, for example.

In addition, after the acid processing and before forming the plating layer 103, it is preferable to neutralize the surface of the resin molded body 101 by washing.

In addition, in the step of forming the plating layer 103, the first plating layer 105 and the second plating layer 107 are formed sequentially using a known method according to the type of metal forming the plating film and the plating method. For example, a seed layer is formed on the roughened surface of the resin molded body 101 and the metal film is grown using the seed layer as a base point.

In the present embodiment, since a roughened layer is formed on the resin molded body 101, it is possible to form the first plating layer 105 in which a plating film is filled in an inner part of a recess provided in the roughened layer. For this reason, it is possible to obtain the plating layer 103 having excellent adhesion to the resin molded body 101.

Through the above, it is possible to obtain the molded body 100 shown in Fig. 2.

There is no limitation on the applications of the molded body 100 obtained in the present embodiment and development is possible for various applications, for example, use is possible for aircraft parts, automotive parts, parts for electronic devices, parts for household electrical appliances, parts for industrial devices, and the like. In particular, it is possible to suitably use the molded body 100 for members in which the plating layer 103 functions as a heat diffusing member, members in which the plating layer 103 functions as a gas barrier, or the like, for example, use is also possible in parts of air conditioners, gas meters, hydrogen supply members of fuel cell vehicles and hydrogen vehicles, and the like.

Description was given of the embodiments of the present invention, but the above are examples of the present invention and it is also possible to adopt various configurations other than the above.

### [Examples]

A detailed description will be given below of the present embodiment with reference to Examples and Comparative Examples. The present embodiment is not limited in any way to the descriptions of these Examples.

### (Examples 1 to 3, Comparative Examples 1 to 6: Plating Layer Configuration and Gas Barrier Property)

With reference to Table 2, a description will be given of Examples relating to the configuration of the plating layer 103 and the gas barrier property.

The gas barrier properties were measured using hydrogen and 134a freon as the gases used.

### (Overview of Molded Products having Plating Layer and Molded Products of Comparative Examples)

In Examples 1 to 3, the plating layer 103 is a double-sided plating of two layers of an electroless Ni film and Cu film from the resin molded body 101 side, with a film thickness of 20 µm. The gases used were Example 1 "hydrogen gas at 23°C, " Example 2 "hydrogen gas at 150°C, " and Example 3 "134a Freon at 80°C".

Comparative Example 1 is an example of measurement using the test piece "phenol resin body" and the gas used was "hydrogen at 23°C".

Comparative Example 2 is an example of measurement using the test piece "phenol resin body" and the gas used was "hydrogen at 150°C".

Comparative Example 3 is an example of measurement using the test piece "coated product (phenol resin body + coating)" and the gas used was "hydrogen at 150°C".

Comparative Example 4 is an example of measurement using the test piece "phenol resin body" and the gas used was "134a freon at 80°C".

Comparative Example 5 is an example of measurement using a test piece "coated product (phenol resin body + coating) at 80°C" and the gas used was "134a freon".

Comparative Example 6 is an example of measurement using the test piece "aluminum alloy ADC12" and the gas used was "134a freon 80°C".

### (Sample Creation Method)

Samples for gas barrier performance measurement: Molded products formed at 175°C for 3 min were processed into test pieces in accordance with JIS K 7126-1 (differential pressure method). The plated products of Examples 1 to 3 were created by applying electroless Ni + electrolytic Cu plating to the surface of the molded products, aiming for a film thickness of 20 µm.

The coated products of Comparative Examples 3 and 5 were created by coating a coating agent having a gas barrier property on the surface of the molded product using a bar coater, aiming for a film thickness of 30 µm, and then drying and baking at a temperature of 80°C for 1 hour + 120°C for 1 hour + 220°C for 2 hours.

### (Gas Barrier Performance Measurement Method)

The measurement of the gas barrier property (gas permeability test) was carried out using the test method in accordance with JIS K 7126-1.

### (Flexural Strength Measurement Method)

A JIS bending test piece was molded at 175°C for 3 min and the strength when the test piece was broken by a method in accordance with JIS K 6911 was set as the flexural strength.

### (Method for Measuring Linear Expansion Coefficient (CTE)α)

A JIS bending test piece was molded at 175°C for 3 min and cured at 180°C for 8 hours to obtain a test piece and TMA measurement was carried out in the flow direction. The TMA measurement in the flow direction was carried out with a temperature rising at 5°C/min and the average linear expansion coefficient for 40°C to 150°C was set as α.

**[Table 2]**

| | | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|
| Level | | Double-sided plating (electroless Ni + electrolytic Cu plating 20 µm) | | | Phenol resin molded product | Phenol resin molded product | Coated product | Phenol resin molded product | Coated product | Aluminum ADC12 |
| Gas used | | Hydrogen | Hydrogen | 134a Freon | Hydrogen | Hydrogen | Hydrogen | 134a Freon | 134a Freon | 134a Freon |
| Thickness | mm | 2.11 | 2.11 | 1. 97 | 2.01 | 2.01 | 1.90 | 3.08 | 2.05 | 3.00 |
| Permeation area | m² | 1.52 × 10⁻³ | 1.52 × 10⁻³ | 3.80 ×10⁻³ | 1.52 × 10⁻³ | 1.52 × 10⁻³ | 1.52 × 10⁻³ | 3.80 × 10⁻³ | 3.80 × 10⁻³ | 3.80 × 10⁻³ |
| Test pressure | mmHg | 4511 | 4511 | 76C | 4511 | 4511 | 4511 | 760 | 760 | 76C |
| Temperature | | 23°C | 150°C | 80°C | 23°C | 150°C | 150°C | 80°C | 80°C | 80°C |
| Gas permeability | mol/(m²·s·Pa) | 2.04 × 10⁻¹⁵ | 4.63 ×10⁻¹⁵ | 2.45 ×10⁻¹⁴ | 7.7 × 10⁻¹³ | 1.57 ×10⁻¹² | 8.93 ×10⁻¹³ | 1.33 ×10⁻¹³ | 2.19 ×10⁻¹⁴ | 2.00 ×10⁻¹⁴ |
| | cm³/(m²·24h·atm) | 0.40 | 9.08 | 4.81 | | 307 | 175 | 26.1 | 4.29 | 3.50 |
| Gas permeability coefficient | mol·m/(m²·s·Pa) | 4.01 × 10⁻¹⁸ | 9.31 ×10⁻¹⁵ | 4.84 ×10⁻¹⁷ | 1.40 ×10⁻¹⁵ | 3.31 ×10⁻¹⁵ | 1.70 × 10⁻¹⁵ | 4.09 ×10⁻¹⁶ | 4.49 ×10⁻¹⁷ | 5.00 ×10⁻¹⁷ |
| | cm³·cm/(cm²·s·cmHg) | 1.22 × 10⁻¹² | 2.78 × 10⁻¹¹ | 1.42 × 10⁻¹¹ | | 9.87 × 10⁻¹⁰ | 5.07 × 10⁻¹⁰ | 1.20 × 10⁻¹⁰ | 1.32 × 10⁻¹¹ | 2.0 × 10⁻¹¹ |
| Tg | E (180°C8h) °C | | | | | | | | | |
| CTE (TD/MD direction) | E (180°C8h) ppm/°C | 22.5/17.3 | 22.5/17.3 | 22.5/17.3 | 24.5/10.6 | 24.5/10.6 | 24.5/10.6 | 24.5/10.6 | 24.5/10.6 | 24.5/10.6 |
| Flexural strength | E (180°C8h) MPa | 177 | 177 | 177 | 248 | 248 | 248 | 248 | 248 | 248 |
| Flexural modulus | E (180°C8h) GPa | 13.6 | 13.6 | 13.6 | 16.7 | 16.7 | 16.7 | 16.7 | 16.7 | 16.7 |

Table 2 shows the measurement results of the Examples and Comparative Examples. The results of the double-sided plating of Examples 1 to 3 exhibited extremely high gas barrier properties. For example, referring to the gas permeability in a case where the gas used was "hydrogen at 23°C," the double-sided plating of Example 1 exhibited a higher gas barrier property than the phenol resin molded product of Comparative Example 1. For the case where the gas used was "hydrogen at 150°C, " the measurement results of the double-sided plating of Example 2 also exhibited higher barrier properties compared to the measurement results of the phenol resin molded product of Comparative Example 2 and the phenol resin molded product of Comparative Example 3. In addition, referring to the gas permeability in a case where the gas used was 134a freon gas (temperature: 80°C), the double-sided plating of Example 3 exhibited a higher gas barrier property compared to the phenol resin molded product of Comparative Example 4 and also exhibited the same level of gas barrier property as the coated product of Comparative Example 5 and ADC12 of Comparative Example 6.

This application claims priority based on Japanese Application JP 2019-232497 filed on December 24, 2019, the entire disclosure of which is incorporated herein.

### REFERENCE SIGNS LIST

- 100:: Molded body
- 101:: Resin molded body
- 103:: Plating layer
- 105:: First plating layer
- 107:: Second plating layer
- 120:: Air conditioner part
- 121:: Piping part (structure)
- 123:: Gas passage
- 125:: Outer side wall
- 126:: Inner side wall

## Claims

1. A gas barrier structure comprising:
a cured product of a thermosetting resin composition; and
a plating layer provided on a surface of the cured product, wherein the plating layer includes a Cu layer, and
a thickness of the Cu layer is 2 µm or more and 50 µm or less.

2. The gas barrier structure according to claim 1,
wherein the thermosetting resin composition is a phenol resin composition.

3. The gas barrier structure according to claim 2,
wherein the phenol resin composition includes a resol-type phenol resin.

4. The gas barrier structure according to any one of claims 1 to 3,
wherein the thermosetting resin composition includes the following components (A) and (B)
(A) phenol resin
(B) calcium carbonate.

5. The gas barrier structure according to any one of claims 1 to 4,
wherein, for the cured product obtained after molding the thermosetting resin composition, a linear expansion coefficient in a range of 40°C to 150°C, as measured by thermomechanical analysis at a temperature rise rate of 5°C/min, is 5 ppm/°C or more and 25 ppm/°C or less.

6. The gas barrier structure according to any one of claims 1 to 5,
wherein a flexural strength of the cured product of the thermosetting resin composition is 140 MPa or more.

7. The gas barrier structure according to any one of claims 1 to 6,
wherein the plating layer includes a Ni layer.

8. The gas barrier structure according to any one of claims 1 to 7,
wherein a gas permeability of hydrogen gas is 2. 0E⁻¹⁵ mol/m²·s·Pa or less in a gas permeability test using a differential pressure method (measurement environment: 23°C, humidity: 0%, permeation area: 15.2 x 10⁻⁴ m², test pressure: 4511 mmHg) .

9. The gas barrier structure according to any one of claims 1 to 8,
wherein a gas permeability of 134a freon gas is 2.0E⁻¹⁴ mol/m²·s·Pa or less in a gas permeability test using a differential pressure method (measurement environment: 80°C, humidity: 0%, permeation area: 38 cm², test pressure: 760 mmHg).

10. A gas barrier structure comprising:
a cured product of a thermosetting resin composition; and
a plating layer provided on a surface of the cured product,
wherein a gas permeability of hydrogen gas is 2.0E⁻¹⁵ mol/m²·s·Pa or less in a gas permeability test using a differential pressure method (measurement environment: 23°C, humidity: 0%, permeation area: 15.2 × 10⁻⁴ m², test pressure: 4511 mmHg) .

11. A gas barrier structure comprising:
a cured product of a thermosetting resin composition; and
a plating layer provided on a surface of the cured product,
wherein a gas permeability of 134a freon gas is 2.0E⁻¹⁴ mol/m²·s·Pa or less in a gas permeability test using a differential pressure method (measurement environment: 80°C, humidity: 0%, permeation area: 38 cm², test pressure: 760 mmHg).

12. The gas barrier structure according to claim 10 or 11,
wherein the thermosetting resin composition includes the following components (A) and (B)
(A) phenol resin
(B) calcium carbonate.

13. The gas barrier structure according to any one of claims 10 to 12,
wherein, for the cured product obtained by molding and then curing the thermosetting resin composition, a linear expansion coefficient in a range of 40°C to 150°C, as measured by thermomechanical analysis at a temperature rise rate of 5°C/min, is 5 ppm/°C or more and 25 ppm/°C or less.

14. An air conditioner part comprising:
the gas barrier structure according to any one of claims 1 to 13.

15. A gas metering apparatus comprising:
the gas barrier structure according to any one of claims 1 to 13.

16. An automotive part comprising:
the gas barrier structure according to any one of claims 1 to 13.
